# EUROPÄISCHE PATENTSCHRIFT

(11) **EP 2 759 578 B1**
(45) Veröffentlichungstag und Bekanntmachung des Hinweises auf die Patenterteilung: **02.05.2018**
(21) Anmeldenummer: 14151915.7
(22) Anmeldetag: 21.01.2014
(51) Int. Cl.: C09J 5/04, C09J 7/00

(54) **Reaktive Haftklebstoffprodukte**
Reactive pressure-sensitive adhesive products
Produits adhésifs réactifs sensibles à la pression

(30) Priorität: 24.01.2013 US 201361755988 P; 24.01.2013 EP 13152464
(43) Veröffentlichungstag der Anmeldung: 30.07.2014
(73) Patentinhaber: BASF SE, 67056 Ludwigshafen am Rhein (DE)
(72) Erfinder: Gerst, Matthias, 67056 Ludwigshafen (DE); Licht, Ulrike, 68309 Mannheim (DE); Dimmer, Jörg-Alexander, 68161 Mannheim (DE); Birnbrich, Paul, 42719 Solingen (DE)
(74) Vertreter: BASF IP Association

(56) Entgegenhaltungen:
- EP-A1- 0 300 847
- WO-A2-95/27764
- DD-A1- 228 292
- GB-A- 1 037 989
- US-A1- 2005 096 432

## Beschreibung

Die Erfindung betrifft mit einem Zweikomponentenhaftklebstoff beschichtete Haftklebstoffprodukte.

Bei Haftklebstoffen und bei Strukturklebstoffen wird eine besonders hohe Leistungsfähigkeit und Klebekraft oftmals über reaktive Zweikomponentensysteme (2K-Systeme) erreicht. Dabei werden zwei Komponenten, die miteinander reagieren können, aus zwei separaten Vorratsbehältern ausgebracht und vor der Verklebung miteinander vermischt, z.B. ein Epoxid mit einem Amin oder ein Isocyanat mit einem Alkohol. 2K-Klebstoffe werden insbesondere bei solchen Anwendungen eingesetzt, bei denen es auf eine besonders starke Klebewirkung ankommt. Nachteilig ist dabei allerdings die aufwändigere Anwendung, da die zwei Komponenten erst kurz vor der Anwendung vermischt werden. Nachteilig ist auch die begrenzte Topfzeit der Mischung, während der die Komponenten verarbeitet und auf die zu verklebenden Substrate aufgebracht werden können, ohne die Klebstoffeigenschaften zu verlieren. 2K-Systeme gibt es z.B. in Form von 2K-Knetmassen, bei denen zwei Komponenten vor der Anwendung miteinander geknetet werden. Bekannt sind auch 2K-Tuben, bei denen zwei fließfähige Komponenten gleichzeitig ausgebracht werden und durch eine statische Mischvorrichtung miteinander vermischt werden. 1K-Systeme wie z.B. Klebebänder sind zwar ohne Vermischen sofort anwendbar, aber es werden nicht die ultra-hochfesten Klebewirkungen erreicht wie mit 2K-Strukturklebern. Klebebänder, bei denen eine Komponente in verkapselter Form vorliegt und durch thermische Aktivierung freigesetzt werden kann, z.B. durch Schmelzen einer kristallinen Komponente, haben den Nachteil einer nur begrenzten Lagerstabilität, insbesondere bei höheren Umgebungstemperaturen.

Aufgabe der vorliegenden Erfindung war es Zweikomponentenklebesysteme zur Verfügung zu stellen ohne nachteilige Topfzeit und ohne dass ein Ausbringen aus separaten Vorratsbehältern und Vermischen erforderlich ist, mit hoher Leistungsfähigkeit und Klebekraft sowie einer vereinfachten, sicheren Anwendbarkeit und mit guter Lagerstabilität, insbesondere auch bei höheren Umgebungstemperaturen.

Gegenstand der Erfindung ist ein Haftklebstoffprodukt in Form von einem oder mehreren 2-Komponenten-Klebstofflaminaten, wobei die Klebstofflaminate auf einem abziehbaren Abdeckmaterial (1) Beschichtungen mit einem Zweikomponentenhaftklebstoff aufweisen,
wobei die Beschichtung aus mindestens einem ersten Bereich (2) und aus mindestens einem zweiten Bereich (3) gebildet ist,
wobei der erste Bereich eine erste Komponente des Zweikomponentenhaftklebstoffs (2) enthält und diese erste Komponente Haftklebrigkeit aufweist und eine oder mehrere Verbindungen mit ersten funktionellen Gruppen enthält, und
wobei der zweite Bereich eine zweite Komponente des Zweikomponentenhaftklebstoffs (3) enthält, welche eine oder mehrere Verbindungen mit zweiten funktionellen Gruppen enthält, und
wobei die ersten und die zweiten funktionellen Gruppen bei Kontakt des ersten und des zweiten Bereichs miteinander unter Aushärtung der Beschichtung miteinander reagieren können bzw. miteinander reagieren,
und wobei der erste und der zweite Bereich auf einem einzigen Klebstofflaminat nebeneinander angeordnet sind.

Das molare Verhältnis der ersten funktionellen Gruppen zu den zweiten funktionellen Gruppen beträgt dabei vorzugsweise von 1:4 bis 4:1, besonders bevorzugt von 1:2 bis 2:1.

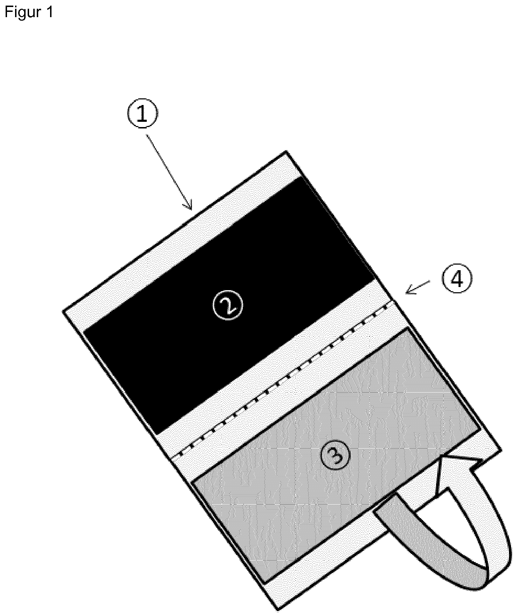

Die vorliegende Erfindung bietet eine Lösung ohne nachteilige Topfzeit an. Hierbei werden jeweils zwei Beschichtungszusammensetzungen (2) und (3) mit den reaktiven Komponenten getrennt voneinander hergestellt. Besonders günstig ist die Herstellung eines einzigen Klebstoff-Laminates (siehe Fig. 1), um die reaktiven Klebstoff-Beschichtungen (2) und (3) vor der Anwendung einfach in Kontakt und damit zur Reaktion zu bringen.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine Haftklebstoffdispersion ist eine Zusammensetzung, welche ein in Wasser oder in wässrigem Medium dispergiertes Polymer mit (nach dem Trocknen) haftklebrigen Eigenschaften enthält.

Im Folgenden wird die Bezeichnung (Meth)acrylat und ähnliche Bezeichnungen als abkürzende Schreibweise verwendet für "Acrylat oder Methacrylat".

Abziehbare Abdeckmaterialien (1) sind Materialien, welche zumindest einseitig, vorzugsweise beidseitig eine Release-Oberfläche aufweisen, von denen sich die Klebstoffbeschichtung zumindest im nicht gehärteten Zustand und vorzugsweise auch im gehärteten Zustand leicht ablösen lässt. Geeignete Abdeckmaterialien sind z.B. silikonisiertes Papier oder silikonisierte Kunststofffolie.

Vorzugsweise ist das Abdeckmaterial einseitig mit den zwei Komponenten des Zweikomponentenhaftklebstoffs beschichtet.

Vorzugsweise weist nicht nur die mit dem Zweikomponentenhaftklebstoff beschichtete Seite sondern auch die nicht mit dem Zweikomponentenhaftklebstoff beschichtete Seite eine Release-Oberfläche auf, an welcher die mit dem Zweikomponentenhaftklebstoff beschichtete Seite nicht anhaftet, wenn sie mit dieser in Kontakt kommt. Derartige Systeme können zum Beispiel als Klebebänder ausgestaltet werden, welche sich zu Rollen aufrollen und lagern lassen und die sich bei der Anwendung wieder leicht abrollen lassen.

Vorzugsweise sind der erste Bereich und der zweite Bereich der Klebstoffbeschichtung auf dem Abdeckmaterial in Längsrichtung nebeneinander angeordnet. Das Abdeckmaterial weist vorzugsweise eine zwischen dem ersten und dem zweiten Bereich angeordnete Sollbruchstelle auf. Bei der Sollbruchstelle kann es sich beispielsweise um eine Verjüngung oder Einkerbung des Materials oder vorzugsweise um eine Perforation handeln.

Die Anwendung des Haftklebstofflaminats kann derart erfolgen, dass zunächst ein optional vorhandener Release-Liner von der Klebstoffoberfläche abgezogen wird. Dann wird das Klebstofflaminat so umgeklappt, dass der erste und der zweite Bereich der Beschichtung mit dem Zweikomponentenhaftklebstoff miteinander in Kontakt kommen und eine Aushärtung des Zweikomponentenklebstoffs initiiert wird. Dann kann ein Teil des Abdeckmaterials, vorzugsweise unter Auftrennung an einer Sollbruchstelle, abgetrennt werden, sodass ein Bereich der Beschichtung mit dem Zweikomponentenhaftklebstoff zumindest teilweise freigelegt wird. Vorzugsweise wird derjenige Teil freigelegt, welcher die höhere Anfangshaftklebrigkeit aufweist. Zur Kennzeichnung dieses Teils kann der entsprechende Bereich des Abdeckmaterials in geeigneter Weise markiert sein, z.B. optisch durch Farbe, Symbole oder Beschriftung. Der durch Abtrennung eines Teils des Abdeckmaterials freigelegte Bereich kann dann mit einem ersten Substrat verbunden werden, z.B. auf eine Wand geklebt werden. Dann kann der übrige Teil des Abdeckmaterials abgetrennt werden. Der durch Abtrennung des übrigen Teils des Abdeckmaterials freigelegte Bereich kann dann, insbesondere wenn eine hinreichende Aushärtung erfolgt ist, mit dem zweiten Substrat, z.B. einem Objekt, das an der Wand befestigt werden soll, verbunden werden.

Ein Gegenstand der Erfindung ist deshalb auch ein Verfahren zum Verkleben eines ersten Substrats mit einem zweiten Substrat, wobei
(1) ein erfindungsgemäßes Haftklebstoffprodukt zur Verfügung gestellt wird, wobei der erste und der zweite Bereich der Beschichtungen auf einem einzigen Klebstofflaminat nebeneinander angeordnet sind und wobei das Klebstofflaminat zwischen dem ersten und zweiten Bereich der Beschichtung mit dem Zweikomponentenhaftklebstoff eine Sollbruchstelle, vorzugsweise eine Perforation aufweist,
(2) das Klebstofflaminat längs der Sollbruchstelle umgeklappt wird, sodass der erste und der zweite Bereich der Beschichtung mit dem Zweikomponentenhaftklebstoff miteinander in Kontakt kommen und eine Aushärtung des Zweikomponentenklebstoffs initiiert wird,
(3) ein Teil des Abdeckmaterials unter Auftrennung an der Sollbruchstelle abgetrennt wird, sodass ein Bereich der Beschichtung mit dem Zweikomponentenhaftklebstoff zumindest teilweise freigelegt wird,
(4) der durch Abtrennung des Abdeckmaterials freigelegte Bereich mit dem ersten Substrat verbunden wird,
(5) der übrige Teil des Abdeckmaterials abgetrennt wird und
(6) der durch Abtrennung des übrigen Teils des Abdeckmaterials freigelegte Bereich mit dem zweiten Substrat verbunden wird.

Bei einer typischen Anwendung klappt der Anwender des Klebstofflaminats das Laminat an der Perforationsstelle um und drückt den reaktiven ersten Beschichtungsbereich A passgenau auf den zweiten Beschichtungsbereich B. Dann kann die erste Hälfte des Abdeckmaterials, z.B. eines Silikonpapiers abgezogen und der Klebstoff auf dem gewünschten Substrat platziert werden, z.B. für die Fixierung eines Spiegels an eine Fliesenwand. Die zweite Hälfte des Silikonpapiers kann anschließend entfernt und das zweite Substrat, z.B. der Spiegel, auf das Klebstofflaminat gedrückt werden. Das Verfahren erlaubt auch, derartige Beschichtungen mit Hilfe eines doppelseitigen Release-Liners auf- bzw. abzurollen und die Bedarfsmengen genau abzuschneiden. Neben der einfachen Anwendung zeigt sich ein weiterer Vorteil darin, dass die Klebstoff-Beschichtungen A und B zunächst sehr adhäsiv sind und gut auf die zu verklebenden Substrate auffließen. Erst nach einer vom Klebstoffhersteller durch Wahl von Art und Mengen der reaktiven Komponenten einstellbaren Reaktionszeit reagieren sie miteinander und bauen Kohäsion auf.

Die erste Komponente des 2K-Klebstoffs kann eine Basiskomponente sein. Die zweite Komponente des 2K-Klebstoffs kann eine Härterkomponente, auch Vernetzerkomponente genannt, sein. Bei Kontakt der beiden Komponenten wird eine Aushärtung initiiert indem die funktionellen Gruppen miteinander reagieren. Die Initiierung oder die Beschleunigung der Aushärtung kann auch durch einen weiteren äußeren Einfluss, z.B. thermisch durch Erwärmen oder photochemisch durch Licht erfolgen.

Die ersten und die zweiten funktionellen Gruppen können unabhängig voneinander entweder in ein Polymer eingebaut vorliegen und/oder als funktionelle Gruppen von nicht-polymeren Additiven vorliegen. Geeignete erste und zweite funktionelle Gruppen können beispielsweise ausgewählt sein aus der Gruppe bestehend aus Epoxiden, Aminen, Ureidogruppen, Hydroxygruppen, Säuregruppen, Isocyanaten, phenolischen Gruppen, Harnstoffgruppen, Verbindungen basierend auf hydroxymethyliertem Harnstoff, ethylenischen Doppelbindungen und Initiatorgruppen, welche eine radikalische Polymerisation initiieren können.

Bevorzugte 2K-Klebstoffsysteme sind solche, bei denen die ersten und die zweiten funktionellen Gruppen - die entweder in ein oder mehrere Polymere eingebaut sind, oder in nicht-polymeren Additiven enthalten sind, oder beides - ausgewählt sind aus:
(i) Epoxiden in Kombination mit Aminen, Ureidogruppen, Säuregruppen oder Hydroxygruppen;
(ii) Isocyanaten in Kombination mit Aminen, Hydroxygruppen oder Säuregruppen;
(iii) Verbindungen basierend auf hydroxymethyliertem Harnstoff in Kombination mit phenolischen Gruppen und/oder nicht-aromatischen alkoholischen Gruppen;
(iv) Doppelbindungen in Kombination mit Initiatorgruppen, welche eine radikalische Polymerisation initiieren können; oder
(v) Ketone in Kombination mit Hydraziden oder Aminen, insbesondere Ketogruppen in Kombination mit Dihydraziden oder Diaminen.

Beispiele für (i) sind Formulierungsadditive, die Epoxidgruppen enthalten wie beispielsweise Epoxidharze wie Bisphenol-A-bisglycidylether bzw. höhermolekulare Polymere davon oder Polymere die Comonomere enthalten mit Epoxideinheiten wie beispielsweise Glycidylmethacrylat, jeweils kombiniert mit beispielsweise organischen Diaminen, Diolen und/oder Dicarbonsäuren.

Beispiele für (ii) sind Klebstoffe die aus folgenden Grundbausteinen aufgebaut sind: Methylendiphenyldiisocyanat (MDI), Isophorondiisocyanat (IPDI), Toluylendiisocyanat (TDI), Hexamethylendiisocyanat (HDI), die monomer oder auch in Makromolekülen gebunden sein können oder Isocyanatgruppen enthaltende Monomere die mit anderen Monomeren copolymerisiert sind, jeweils kombiniert mit Diaminen und/oder Diolen.

Beispiele für (iii) sind Verbindungen basierend auf hydroxymethyliertem Harnstoff wie beispielsweise 1,3-Bis-(hydroxymethyl)imidazolidin-2-on oder Polymere die methylenhydroxyfunktionalisierte Monomere enthalten, jeweils kombiniert mit phenolischen und/oder nichtaromatischen Alkoholen.

Beispiele für (iv) sind Systeme mit Doppelbindungen wie Acrylatester-Harze (Laromere®) oder Polymere die olefinische C=C-Doppelbindungen enthalten, beispielsweise in Form von copolymerisiertem Allylmethacrylat, jeweils kombiniert mit geeigneten Initiatoren, z.B. Peroxidverbindung, z.B. t-Butylhydroperoxid oder Alkylborane.

Beispiele für (v) sind Diacetonacrylamid kombiniert mit Adipinsäuredihydrazid und/oder Diaminen.

Bei den 2K-Klebstoffen kann es sich insbesondere um Polyester, kalthärtende Epoxidharze, Polyurethane oder Acrylatklebstoffe handeln.

Die Beschichtung des Haftklebstofflaminats mit dem Zweikomponentenhaftklebstoff kann beispielsweise in Form einer wässrigen Dispersion, eines Schmelzklebstoffs, eines UV-härtbaren Schmelzklebstoffs oder eines Lösemittelklebstoffs erfolgen.

Geeignete Materialien für das Abdeckmaterial können sein: z.B. silikonisiertes Papier oder silikonisierte Kunststofffolie.

Gegenstand der Erfindung ist auch ein Klebeartikel in Form eines Klebebandes oder einer Klebefolie, welcher ein erfindungsgemäßes Haftklebstofflaminat aufweist. In einer Ausführungsform ist der Klebeartikel als trägerloses Klebeband ausgebildet, welches neben der Abdeckschicht und der Beschichtung kein Trägermaterial aufweist. Optional kann der Klebeartikel einen Release-Liner auf der Klebstoffschicht aufweisen. Der Klebeartikel kann insbesondere in Form eines Klebebandes vorliegen, wobei die Abdeckschicht einseitig mit einem Zweikomponentenhaftklebstoff beschichtet ist, wobei der erste Bereich und der zweite Bereich der Beschichtung in Längsrichtung nebeneinander jeweils auf einer Hälfte des Klebebandes angeordnet sind und wobei das Abdeckmaterial eine zwischen dem ersten und dem zweiten Bereich in Längsrichtung mittig angeordnete Sollbruchstelle, vorzugsweise eine Perforation aufweist.

Zur Herstellung der Klebstoffartikel kann eine Klebstoffschicht auf das Trägermaterial in üblicher Weise aufgebracht werden, z. B. durch Rollen, Rakeln, Streichen etc. Im Falle der Verwendung einer wässrigen Klebstoffdispersion kann das Wasser durch Trocknung bei z.B. 50 bis 150°C entfernt werden. Die so erhaltenen, beschichteten Substrate werden z.B. in Form von Klebebändern oder Klebefolien verwendet. Die Träger können hierzu vor oder nach dem Aufbringen des Klebstoffs zu Klebebändern, Etiketten oder Folien geschnitten werden. Zur späteren Verwendung kann die mit Klebstoff beschichtete Seite der Substrate, mit einem Releasepapier, z. B. mit einem silikonisierten Papier, abgedeckt werden.

Für die Herstellung von Klebebändern ist das auf Feststoffgehalt bezogene Auftragsgewicht der Klebstoffzusammensetzung vorzugsweise mindestens 20 g/m² oder mindestens 30 g/m², z.B. 20 bis 200 g/m² oder 30 bis 200 g/m².

Die erfindungsgemäßen Haftklebstofflaminate haben sehr starke Klebeeigenschaften, sind einfach anwendbar und haben eine hohe Lagerstabilität.

### Beschreibung der Figuren:

Figur 1: Haftklebstofflaminat
   (1) Abdeckmaterial, z.B. Release-Liner, Silikonpapier
   (2) erster Bereich der Klebstoffbeschichtung A, z.B. mit Epoxid-Gruppen
   (3) zweiter Bereich der Klebstoffbeschichtung B, z.B. mit Amingruppen
   (4) Sollbruchstelle des Abdeckmaterials, z.B. Perforation
Figur 2: Erfindungsgemäße Verklebung zweier Substrate
   (2) erster Bereich der Klebstoffbeschichtung A, z.B. mit Epoxid-Gruppen
   (3) zweiter Bereich der Klebstoffbeschichtung B, z.B. mit Amingruppen Hier sind die beiden verklebten Substrate nach der Aushärtungszeit nicht mehr von Hand voneinander trennbar.
Figur 3a: Nicht-erfindungsgemäße Verklebung zweier Substrate
   (2) Klebstoffbeschichtung A, z.B. mit Epoxid-Gruppen
      Hier sind die Substrate auch nach langer Zeit noch von Hand voneinander trennbar.
Figur 3b: Nicht-erfindungsgemäße Verklebung zweier Substrate
   (3) Klebstoffbeschichtung B, z.B. mit Amingruppen
      Hier sind die Substrate auch nach langer Zeit noch von Hand voneinander trennbar.

### Beispiele

### Abkürzungen:

- GMA: Glycidylmethacrylat
- MMA: Methylmethacrylat
- MEK: Methylethylketon
- n-BA: n-Butylacrylat
- MA: Methylacrylat
- AS: Acrylsäure
- HBA: Hydroxybutylacrylat
- EHA: Ethylhexylacrylat
- Fotoinitiator: polymerisierbarer Fotoinitiator (35%ige Lösung in MEK), hergestellt durch Veresterung von 4-Hydroxybenzophenon und Acryloxybutylchlorformiat
- Lupragen® API: N-(3-Aminopropyl)-imidazol
- Joncryl® ADR 4380: reaktives Epoxid-Acrylatharz, Epoxy-Gewichtsäquivalent 450 g/mol

### 1.) Beispiele mit Hotmelts

### Herstellbeispiel B1: Polyacrylat-Hotmelt mit GMA

In einer Polymerisationsapparatur bestehend aus Glasreaktor, Rückflusskühler, Rührer und Stickstoffeinlass werden in leichtem Stickstoffstrom 256 g MEK vorgelegt und auf 80 °C erwärmt. Es werden 40 g einer Monomeren-Mischung bestehend aus 596 g n-Butylacrylat, 200 g Glycidylmethacrylat und 11,4 g Fotoinitiator (35%ig in MEK) zugegeben. Nach Wiedererreichen von 80°C werden 2,27 g einer Starterlösung aus 5,3 g tert.-Butylperpivalat (75%ig in Mineralöl) und 40 g MEK zugegeben und 3 min anpolymerisiert. Dann wird die restliche Monomerenmischung und Starterlösung in 3h zugefahren. Anschließend wird die Temperatur auf 90°C erhöht und eine Lösung von 2,13 g tert.-Butylperpivalat (75%ig in Mineralöl) in 40 g MEK in 30 min zugegeben. Danach wird Vakuum angelegt und das Lösungsmittel bei maximal 135°C und <50 mbar abdestilliert. Anschließend wird noch unter langsamem Rühren 1h bei 135°C und bestem Vakuum entgast. Die Schmelze wird abgelassen.
K-Wert; 1% in THF: 51,3
Nullviskosität bei 130°C: 140 Pa s

### Herstellbeispiel B2: Polyacrylat-Hotmelt mit MMA

In einer Polymerisationsapparatur bestehend aus Glasreaktor, Rückflusskühler, Rührer und Stickstoffeinlass werden in leichtem Stickstoffstrom 256 g MEK vorgelegt und auf 80 °C erwärmt. Es werden 40,37 g einer Monomeren-Mischung bestehend aus 636 g n-Butylacrylat, 160 g MMA und 11,4 g Fotoinitiator (35%ig in MEK) zugegeben. Nach Wiedererreichen von 80°C werden 2,27 g einer Starterlösung aus 5,3g tert.-Butylperpivalat (75%ig in Mineralöl) und 40 g MEK zugegeben und 3 min anpolymerisiert. Dann wird die restliche Monomerenmischung und Starterlösung in 3h zugefahren. Anschließend wird die Temperatur auf 90°C erhöht und eine Lösung von 2,13 g tert.-Butylperpivalat (75%ig in Mineralöl) in 40 g MEK in 30 min zugegeben. Danach wird Vakuum angelegt und das Lösungsmittel bei maximal 135°C und <50 mbar abdestilliert. Anschließend wird noch unter langsamem Rühren 1h bei 135°C und bestem Vakuum entgast. Die Schmelze wird abgelassen.
K-Wert; 1% in THF: 49,6
Nullviskosität bei 130°C: 92,8 Pa s

### Beschichtungen:

Zu Hotmelt (B2) werden unter Erwärmen auf 90°C 10% Lupragen® API gemischt, auf einem beheizbaren Streichtisch wird ein Film von 44 g/m² auf einen Release Liner aufgerakelt und mit einem Release Liner abgedeckt (=> Schicht B des Klebstofflaminats).

Hotmelt (B1) wird bei 130°C mit 40 g/m² auf einen Release Liner aufgerakelt und abgedeckt (=> Schicht A des Klebstofflaminats).

### Verklebungsbeispiel 1:

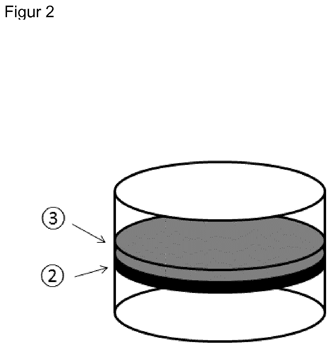

Je ein 1 cm breiter Streifen von Schicht A und B werden nebeneinander wie in Fig. 1 angeordnet, zusammengeklappt und nach dem Entfernen des Release Liners mittig auf die Rückseite einer kleinen Metallschale aufgebracht. Eine zweite Metallschale wird aufgedrückt und der Verbund 24 h bei Raumtemperatur (ca. 23°C) gelagert. Dann wird versucht, die Schalen durch Auseinanderziehen (Scherbeanspruchung) zu trennen. Nach 24 h können die Schalen nicht mehr manuell getrennt werden (siehe Fig. 2).

### Verklebungsbeispiel 2:

Je ein 1 cm breiter Streifen von Schicht A und B werden nebeneinander wie in Fig. 1 angeordnet, zusammengeklappt und nach dem Entfernen des Release Liners mittig auf die Rückseite einer kleinen Metallschale aufgebracht. Eine zweite Metallschale wird aufgedrückt und der Verbund 2 h bei 100°C im Trockenschrank gelagert. Nach dem Abkühlen wird versucht, die Schalen durch Auseinanderziehen (Scherbeanspruchung) zu trennen. Die Schalen können nicht mehr manuell getrennt werden (siehe Fig. 2).

### Vergleichsversuch:

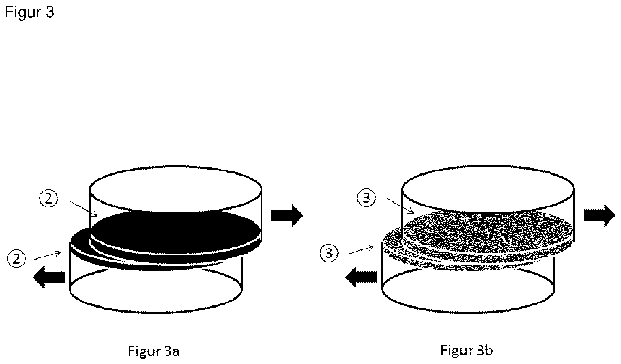

Statt Schicht A und B, wird zweimal die gleiche Schicht A nebeneinander wie in Abb. 1 aufgebracht und damit wie bei Verklebungsbeispiel 1 zwei Metallschalen verklebt. Nach 24 h bei Raumtemperatur können die Schalen durch Scherbeanspruchung manuell auseinandergezogen werden (siehe Fig. 3).

### Verklebungsbeispiel 3:

Ein 25 mm breiter und 25 mm langer Streifen der Beschichtung A (Hotmelt B2) wird neben einem 25 mm breiten und 25 mm langen Streifen B (Hotmelt B1) angeordnet wie in Fig. 1, zusammengeklappt und nach den Entfernen des Releaseliners auf einen Prüfkörper (verzinktes Stahlblech, mit Aceton abgewischt) aufgebracht. Ein zweiter Prüfkörper wird aufgelegt, 5 s mit 2 kg belastet und danach 30 min im Ofen bei 160°C gehärtet.
Ein Zugscherversuch mit 10 mm/min ergibt eine Zugfestigkeit von 0,37 MPa.

### Herstellbeispiel B3: Hotmelt mit GMA-Gruppen

In einer Polymerisationsapparatur bestehend aus Glasreaktor, Rückflusskühler, Rührer und Stickstoffeinlass werden in leichtem Stickstoffstrom 160 g Methylethylketon (MEK) vorgelegt und auf 80 °C erwärmt. Es werden 40,4 g einer Monomerenmischung bestehend aus 596 g 2-Ethylhexylacrylat, 200 g Glycidylmethacrylat und 11,4 g Fotoinitiator (35%ig in MEK) zugegeben. Nach Wiedererreichen von 80°C werden 2,27 g einer Starterlösung aus 5,3 g tert.-Butylperpivalat (75%ig in Mineralöl) und 40 g MEK zugegeben und 3 min anpolymerisiert. Dann wird die restliche Monomerenmischung und Starterlösung in 3h zugefahren. Anschließend wird die Temperatur auf 90°C erhöht und eine Lösung von 2,13 g tert.-Butylperpivalat (75%ig in Mineralöl) in 40 g MEK in 30 min zugegeben. Die Lösung wird abgekühlt.
Feststoffgehalt: 60%, K-Wert (1% in THF): 51,1

Zu 1117,8 g der obigen Lösung werden 74,4 g Joncryl® ADR 4380 zugegeben und gut verrührt. Danach wird Vakuum angelegt, die Temperatur langsam erhöht und das Lösungsmittel bei maximal 135°C und <50 mbar abdestilliert. Anschließend wird noch unter langsamen Rühren 1h bei 135°C und bestem Vakuum entgast. Die Schmelze wird abgelassen.
Nullviskosität bei 130°C: 55 Pa s

Der Hotmelt wird mit 52g/m² heiß aufgerakelt und mit 20 mJ/cm² UVC-Strahlung bestrahlt.-(Beschichtung A2).

### Herstellbeispiel B4: Hotmelt mit Säuregruppen

In einer Polymerisationsapparatur bestehend aus Glasreaktor, Rückflusskühler, Rührer und Stickstoffeinlass werden in leichtem Stickstoffstrom 160 g Methylethylketon (MEK) vorgelegt und auf 80 °C erwärmt. Es werden 40,4 g einer Monomerenmischung bestehend aus 596 g 2-Ethylhexylacrylat, 120 g Methylmethacrylat, 80 g Acrylsäure und 11,4 g Fotoinitiator (35%ig in MEK) zugegeben. Nach Wiedererreichen von 80°C werden 2,27 g einer Starterlösung aus 5,3 g tert.-Butylperpivalat (75%ig in Mineralöl) und 40 g MEK zugegeben und 3 min anpolymerisiert. Dann wird die restliche Monomerenmischung und Starterlösung in 3h zugefahren. Anschließend wird die Temperatur auf 90°C erhöht und eine Lösung von 2,13 g tert.-Butylperpivalat (75%ig in Mineralöl) in 40 g MEK in 30 min zugegeben. Die Lösung wird abgekühlt.
Feststoffgehalt: 61%; K-Wert (1% in THF): 56,1
Die Lösung wird auf einen Releaseliner aufgerakelt und getrocknet, so dass 58g/m² fest vorliegen. Die Schicht wird mit 20 mJ/cm² UVC- Strahlung bestrahlt (Beschichtung B2).

### Verklebungsbeispiel 4:

Ein 25 mm breiter und 25 mm langer Streifen der Beschichtung A2 (Hotmelt B3) wird neben einem 25 mm breiten und 25 mm langen Streifen B2 (Hotmelt B4) angeordnet wie in Fig. 1, zusammengeklappt und nach den Entfernen des Releaseliners auf einen Prüfkörper (verzinktes Stahlblech, mit Aceton abgewischt) aufgebracht. Ein zweiter Prüfkörper wird aufgelegt, 5 s mit 2 kg belastet und danach 30 min im Ofen bei 160°C gehärtet.
Ein Zug-Scherversuch von 3 Prüfkörpern mit 10 mm/min ergibt im Mittel eine Zugfestigkeit von 0,43 MPa.

### 2.) Beispiele mit Emulsionspolymerisaten:

Die Polymerdispersionen wurden mittels semi-kontinuierlicher Emulsionspolymerisation hergestellt. Dabei wurden die Teilchengrößen mittels einer Styrolsaat in der Reaktorvorlage kontrolliert. Die Mengenzusammensetzungen sind In Tabelle 1 zusammengestellt. Anstelle n-BA wurde in einer weiteren Serie auch Ethylhexylacrylat (EHA) eingesetzt. Aufgrund der sehr niedrigen Glasübergangstemperatur von Tg << 0°C besitzen alle Filme die aus den Dispersionen D1 - D5 hergestellt wurden eine sehr hohe Sofortklebrigkeit.

**Tabelle 1: Monomerzusammensetzungen zur Herstellung der Klebstoffdispersionen, Mengenangaben in Gewichtsteilen**

| Bsp. | n-BA | MMA | MA | HBA | GMA | AS |
|---|---|---|---|---|---|---|
| D1 | 75 | | 20 | | 5 | |
| D2 | 75 | | 20 | 5 | | |
| D3 | 79 | 21 | | | | |
| D4 | 89,5 | | | | 10 | 0,5 |
| D5 | 79,5 | 20 | | | | 0,5 |

Die Dispersionen D3 und D5 wurden zusätzlich mit N,N-DMDPTA (N,N-Dimethyldipropylen-triamin, 5 Gew.% bezogen auf den Feststoffanteil der jeweiligen Dispersion) versetzt und sind im weiteren Text mit D3' und D5' bezeichnet.

Die Dispersionen wurden wie in Figur 1 gezeigt nebeneinander auf Silikonpapier mit einer Nassfilmdicke von 120 µm beschichtet und getrocknet. Anschließend wurde zunächst die in Figur 1 mit 2 bezeichnete Schicht auf die mit 3 bezeichnete Schicht durch exaktes Umklappen des Silikonpapiers gebracht und leicht angedrückt. Eine Hälfte des Silikonpapiers wurde dann entfernt und die klebende Schicht bestehend aus 2 und 3 auf eine Hostafan® BN-50 Folie (Substrat I) gedrückt, so dass nicht die gesamte Folie bedeckt war (Klebeschicht ca.
10x10 cm²). Die zweite Hälfte des Silikonpapiers wurde daraufhin abgezogen und eine zweite Hostafan® BN-50 Folie (Substrat II) wurde auf die Klebeschicht der ersten Folie für eine kurze Zeit fest aufgedrückt.

Es wurden Kreuzexperimente durchgeführt und sowohl die mit 2 bezeichneten Schichten (siehe Figur 3a) als auch die mit 3 bezeichneten Schichten (siehe Figur 3b) auf die erste Hostafan® BN-50 Folie (Substrat I) transferiert, auf welche dann nach Abziehen der zweiten Hälfte des Silikonpapiers die zweite Hostafan® BN-50 Folie gedrückt wurde. Die so hergestellten Laminate wurden für einige Zeit gelagert um eine Aushärtung zu gewährleisten. Anschließend wurde versucht die Folien von Hand auseinander zu ziehen. Tabelle 2 zeigt die verschiedenen Kombinationen und deren Prüfergebnisse. Dabei sind die aus den Dispersionen D1-D5, D3' und D5' hergestellten Klebefilme die der Schicht 2 in Figur 1 entsprechen horizontal von links nach rechts und die, die der Schicht 3 entsprechen von oben nach unten angeordnet.

| | D1 | D2 | D3 | D4 | D5 | D3' | D5' |
|---|---|---|---|---|---|---|---|
| D1 | 0 | + | 0 | 0 | 0 | ++ | ++ |
| D2 | + | 0 | 0 | + | 0 | 0 | 0 |
| D3 | 0 | 0 | 0 | 0 | 0 | 0 | 0 |
| D4 | 0 | + | 0 | 0 | 0 | ++ | ++ |
| D5 | 0 | 0 | 0 | 0 | 0 | 0 | 0 |
| D3' | ++ | 0 | 0 | ++ | 0 | 0 | 0 |
| D5' | ++ | 0 | 0 | ++ | 0 | 0 | 0 |

| | | | | | | | |
|---|---|---|---|---|---|---|---|
| 0 = leicht auseinander zu ziehen, + = schwer auseinander zu ziehen; ++ = nicht auseinander zu ziehen. | | | | | | | |

## Patentansprüche

1. Haftklebstoffprodukt in Form von einem oder mehreren 2-Komponenten-Klebstofflaminaten,
wobei die Klebstofflaminate auf einem abziehbaren Abdeckmaterial Beschichtungen mit einem Zweikomponentenhaftklebstoff aufweisen,
wobei die Beschichtungen aus mindestens einem ersten Bereich und aus mindestens einem zweiten Bereich gebildet sind,
wobei der erste Bereich eine erste Komponente des Zweikomponentenhaftklebstoffs enthält und diese erste Komponente Haftklebrigkeit aufweist und eine oder mehrere Verbindungen mit ersten funktionellen Gruppen enthält, und
wobei der zweite Bereich eine zweite Komponente des Zweikomponentenhaftklebstoffs enthält, welche eine oder mehrere Verbindungen mit zweiten funktionellen Gruppen enthält, und
wobei die ersten und die zweiten funktionellen Gruppen bei Kontakt des ersten und des zweiten Bereichs miteinander unter Aushärtung der Beschichtung miteinander reagieren können,
und wobei der erste und der zweite Bereich auf einem einzigen Klebstoffliaminat nebeneinander angeordnet sind.

2. Haftklebstoffprodukt nach dem ersten Anspruch, **dadurch gekennzeichnet, dass** das Abdeckmaterial einseitig mit dem Zweikomponentenhaftklebstoff beschichtet ist.

3. Haftklebstoffprodukt nach dem vorhergehenden Anspruch, **dadurch gekennzeichnet, dass** die nicht mit dem Zweikomponentenhaftklebstoff beschichtete Seite des Abdeckmaterials eine Release-Oberfläche aufweist, an welcher die mit dem Zweikomponentenhaftklebstoff beschichtete Seite nicht anhaftet, wenn sie mit dieser in Kontakt kommt.

4. Haftklebstoffprodukt nach einem der vorhergehenden Ansprüche, **dadurch gekennzeichnet, dass** der erste Bereich und der zweite Bereich der Beschichtung auf einem einzigen Klebstofflaminat in Längsrichtung nebeneinander angeordnet sind und dass das Abdeckmaterial eine zwischen dem ersten und dem zweiten Bereich angeordnete Sollbruchstelle aufweist.

5. Haftklebstoffprodukt nach einem der vorhergehenden Ansprüche, **dadurch gekennzeichnet, dass** die ersten und die zweiten funktionellen Gruppen unabhängig voneinander entweder in ein Polymer eingebaut vorliegen und/oder als funktionelle Gruppen von nicht-polymeren Additiven vorliegen.

6. Haftklebstoffprodukt nach einem der vorhergehenden Ansprüche, **dadurch gekennzeichnet, dass** die ersten und die zweiten funktionellen Gruppen ausgewählt sind aus der Gruppe bestehend aus Epoxiden, Aminen, Ureidogruppen, Hydroxygruppen, Säuregruppen, Isocyanaten, Verbindungen basierend auf hydroxymethyliertem Harnstoff, phenolischen Gruppen, Harnstoffgruppen, ethylenischen Doppelbindungen und Initiatorgruppen, welche eine radikalische Polymerisation initiieren können.

7. Haftklebstoffprodukt nach dem vorhergehenden Anspruch, **dadurch gekennzeichnet, dass** die ersten und die zweiten funktionellen Gruppen ausgewählt sind aus
(i) Epoxiden in Kombination mit Aminen, Ureidogruppen, Hydroxygruppen oder Säuregruppen; oder
(ii) Isocyanaten in Kombination mit Aminen, Hydroxygruppen oder Säuregruppen; oder
(iii) Verbindungen basierend auf hydroxymethyliertem Harnstoff in Kombination mit phenolischen Gruppen und/oder nicht-aromatischen alkoholischen Gruppen; oder
(iv) Doppelbindungen in Kombination mit Initiatorgruppen, welche eine radikalische Polymerisation initiieren können; oder
(v) Ketogruppen in Kombination mit Dihydraziden oder Diaminen.

8. Haftklebstoffprodukt nach einem der vorhergehenden Ansprüche, **dadurch gekennzeichnet, dass** die Beschichtung mit dem Zweikomponentenhaftklebstoff in Form einer wässrigen Dispersion, eines Schmelzklebstoffs, eines UV-härtbaren Schmelzklebstoffs oder eines Lösemittelklebstoffs aufgebracht ist.

9. Haftklebstoffprodukt nach einem der vorhergehenden Ansprüche, **dadurch gekennzeichnet, dass** das Material des Abdeckmaterials ausgewählt ist aus silikonisiertem Papier und silikonisierter Kunststofffolie.

10. Haftklebstoffprodukt nach einem der vorhergehenden Ansprüche, **dadurch gekennzeichnet, dass** es in Form eines oder mehrerer Klebebänder oder Klebefolien ausgebildet ist und ein oder mehrere Haftklebstotflaminate aufweist.

11. Haftklebstoffprodukt nach dem vorhergehenden Anspruch, **dadurch gekennzeichnet, dass** es als trägerloses Klebeband ausgebildet ist, welches neben der Abdeckschicht und der Beschichtung kein Trägermaterial aufweist.

12. Haftklebstoffprodukt nach einem der beiden vorhergehenden Ansprüche, **dadurch gekennzeichnet, dass** es in Form eines Klebebandes vorliegt, wobei die Abdeckschicht einseitig mit einem Zweikomponentenhaftklebstoff beschichtet ist, wobei der erste Bereich und der zweite Bereich der Beschichtung in Längsrichtung nebeneinander jeweils auf einer Hälfte des Klebebandes angeordnet sind und dass das Abdeckmaterial eine zwischen dem ersten und dem zweiten Bereich in Längsrichtung mittig angeordnete Sollbruchstelle aufweist.

13. Haftklebstoffprodukt nach einem der vorhergehenden Ansprüche, **dadurch gekennzeichnet, dass** das molare Verhältnis der ersten funktionellen Gruppen zu den zweiten funktionellen Gruppen von 1:4 bis 4:1 beträgt.

14. Verfahren zum Verkleben eines ersten Substrats mit einem zweiten Substrat, wobei
(1) ein Haftklebstoffprodukt nach einem der vorhergehenden Ansprüche zur Verfügung gestellt wird, wobei der erste und der zweite Bereich der Beschichtungen auf einem einzigen Klebstofflaminat nebeneinander angeordnet sind und wobei das Klebstofflaminat zwischen dem ersten und zweiten Bereich der Beschichtung mit dem Zweikomponentenhaftklebstoff eine Sollbruchstelle aufweist,
(2) das Klebstofflaminat längs der Sollbruchstelle umgeklappt wird, sodass der erste und der zweite Bereich der Beschichtung mit dem Zweikomponentenhaftklebstoff miteinander in Kontakt kommen und eine Aushärtung des Zweikomponentenklebstoffs initiiert wird,
(3) ein Teil des Abdeckmaterials unter Auftrennung an der Sollbruchstelle abgetrennt wird, sodass ein Bereich der Beschichtung mit dem Zweikomponentenhaftklebstoff zumindest teilweise freigelegt wird,
(4) der durch Abtrennung des Abdeckmaterials freigelegte Bereich mit dem ersten Substrat verbunden wird,
(5) der übrige Teil des Abdeckmaterials abgetrennt wird und
(6) der durch Abtrennung des übrigen Teils des Abdeckmaterials freigelegte Bereich mit dem zweiten Substrat verbunden wird.

15. Haftklebstoffprodukt nach Anspruch 4 oder 12, **dadurch gekennzeichnet, dass** die Sollbruchstelle eine Perforation ist.

## Claims

1. A pressure-sensitive adhesive (PSA) product in the form of one or more 2-component adhesive laminates, the adhesive laminates having coatings with a two-component PSA on a removable liner material, the coatings being formed from at least one first region and from at least one second region, the first region comprising a first component of the two-component PSA, and this first component exhibiting pressure-sensitive adhesive tack and comprising one or more compounds having first functional groups, and the second region comprising a second component of the two-component PSA, this second component comprising one or more compounds having second functional groups, and the first and the second functional groups being able to react with one another, with curing of the coating, when the first and second regions make contact with one another, and the first and second regions being arranged on a single adhesive laminate adjacent one another.

2. The PSA product according to the first claim, wherein the liner material is coated on one side with the two-component PSA.

3. The PSA product according to the preceding claim, wherein the side of the liner material not coated with the two-component PSA has a release surface to which the side coated with the two-component PSA does not adhere if it comes into contact therewith.

4. The PSA product according to any of the preceding claims, wherein the first region and the second region of the coating are arranged adjacent one another in longitudinal direction on a single adhesive laminate and wherein the liner material has a predetermined breakage point arranged between the first and second regions.

5. The PSA product according to any of the preceding claims, wherein the first and second functional groups independently of one another are either present incorporated into a polymer and/or are present as functional groups of nonpolymeric additives.

6. The PSA product according to any of the preceding claims, wherein the first and second functional groups are selected from the group consisting of epoxides, amines, ureido groups, hydroxyl groups, acid groups, isocyanates, compounds based on hydroxymethylated urea, phenolic groups, urea groups, ethylenic double bonds, and initiator groups which are able to initiate a radical polymerization.

7. The PSA product according to the preceding claim, wherein the first and second functional groups are selected from
(i) epoxides in combination with amines, ureido groups, hydroxyl groups, or acid groups; or
(ii) isocyanates in combination with amines, hydroxyl groups, or acid groups; or
(iii) compounds based on hydroxymethylated urea in combination with phenolic groups and/or nonaromatic alcoholic groups; or
(iv) double bonds in combination with initiator groups which are able to initiate a radical polymerization; or
(v) keto groups in combination with dihydrazides or diamines.

8. The PSA product according to any of the preceding claims, wherein the coating with the two-component PSA is applied in the form of an aqueous dispersion, a hotmelt adhesive, a UV-curable hotmelt adhesive, or a solventborne adhesive.

9. The PSA product according to any of the preceding claims, wherein the material of the liner material is selected from siliconized paper and siliconized polymeric film.

10. The PSA product according to any of the preceding claims, which is in the form of one or more adhesive tapes or adhesive sheets and has one or more PSA laminates.

11. The PSA product according to the preceding claim, which is in the form of a carrier-free adhesive tape which besides the liner layer and the coating has no carrier material.

12. The PSA product according to either of the two preceding claims, which is present in the form of an adhesive tape, the liner layer being coated on one side with a two-component PSA, the first region and the second region of the coating being arranged adjacent one another in longitudinal direction in each case on one half of the adhesive tape, and wherein the liner material has a predetermined breakage point arranged centrally in longitudinal direction between the first and second regions.

13. The PSA product according to any of the preceding claims, wherein the molar ratio of the first functional groups to the second functional groups is from 1:4 to 4:1.

14. A method for bonding a first substrate to a second substrate, where
(1) a PSA product according to any of the preceding claims is provided, the first and second regions of the coatings being arranged adjacent one another on a single adhesive laminate, and the adhesive laminate having a predetermined breakage point, between the first and second regions of the coating with the two-component PSA,
(2) the adhesive laminate is folded over along the predetermined breakage point, so that the first and second regions of the coating with the two-component PSA come into contact with one another and curing of the two-component adhesive is initiated,
(3) part of the liner material is detached with separation at the predetermined breakage point, so that a region of the coating with the two-component PSA is at least partly exposed,
(4) the region exposed by detachment of the liner material is joined to the first substrate,
(5) the remainder of the liner material is detached, and
(6) the region exposed by detachment of the remainder of the liner material is joined to the second substrate.

15. The PSA product according to claim 4 or 12, wherein the predetermined breakage point is a perforation.

## Revendications

1. Produit adhésif sensible à la pression sous la forme d'un ou de plusieurs stratifiés adhésifs bicomposants, les stratifiés adhésifs comprenant sur un matériau de recouvrement amovible des revêtements en un adhésif sensible à la pression bicomposant,
les revêtements étant formés par au moins une première zone et au moins une deuxième zone,
la première zone contenant un premier composant de l'adhésif sensible à la pression bicomposant et ce premier composant présentant une adhésivité sensible à la pression et contenant un ou plusieurs composés comprenant des premiers groupes fonctionnels, et
la deuxième zone contenant un deuxième composant de l'adhésif sensible à la pression bicomposant, qui contient un ou plusieurs composés comprenant des deuxièmes groupes fonctionnels, et
les premiers et les deuxièmes groupes fonctionnels pouvant réagir les uns avec les autres lors de la mise en contact de la première et de la deuxième zone l'une avec l'autre avec durcissement du revêtement,
et la première et la deuxième zone étant agencées l'une à côté de l'autre sur un stratifié adhésif individuel.

2. Produit adhésif sensible à la pression selon la première revendication, **caractérisé en ce que** le matériau de recouvrement est revêtu d'un côté avec l'adhésif sensible à la pression bicomposant.

3. Produit adhésif sensible à la pression selon la revendication précédente, **caractérisé en ce que** le côté du matériau de recouvrement non revêtu avec l'adhésif sensible à la pression bicomposant comprend une surface antiadhésive, sur laquelle le côté revêtu avec l'adhésif sensible à la pression bicomposant n'adhère pas lorsqu'il rentre en contact avec celle-ci.

4. Produit adhésif sensible à la pression selon l'une quelconque des revendications précédentes, **caractérisé en ce que** la première zone et la deuxième zone du revêtement sont agencées l'une à côté de l'autre dans la direction longitudinale sur un stratifié adhésif individuel, et **en ce que** le matériau de recouvrement comprend une position de rupture agencée entre la première et la deuxième zone.

5. Produit adhésif sensible à la pression selon l'une quelconque des revendications précédentes, **caractérisé en ce que** les premiers et les deuxièmes groupes fonctionnels se présentent indépendamment les uns des autres sous forme incorporée dans un polymère et/ou sous la forme de groupes fonctionnels d'additifs non polymères.

6. Produit adhésif sensible à la pression selon l'une quelconque des revendications précédentes, **caractérisé en ce que** les premiers et les deuxièmes groupes fonctionnels sont choisis dans le groupe constitué par les époxydes, les amines, les groupes uréido, les groupes hydroxy, les groupes acides, les isocyanates, les composés à base d'urée hydroxyméthylée, les groupes phénoliques, les groupes urée, les doubles liaisons éthyléniques et les groupes initiateurs qui peuvent initier une polymérisation radicalaire.

7. Produit adhésif sensible à la pression selon la revendication précédente, **caractérisé en ce que** les premiers et les deuxièmes groupes fonctionnels sont choisis parmi :
(i) les époxydes en combinaison avec des amines, des groupes uréido, des groupes hydroxy ou des groupes acides ; ou
(ii) les isocyanates en combinaison avec des amines, des groupes hydroxy ou des groupes acides ; ou
(iii) les composés à base d'urée hydroxyméthylée en combinaison avec des groupes phénoliques et/ou des groupes alcooliques non aromatiques ; ou
(iv) les doubles liaisons en combinaison avec des groupes initiateurs qui peuvent initier une polymérisation radicalaire ; ou
(v) les groupes céto en combinaison avec des dihydrazides ou des diamines.

8. Produit adhésif sensible à la pression selon l'une quelconque des revendications précédentes, **caractérisé en ce que** le revêtement avec l'adhésif sensible à la pression bicomposant est appliqué sous la forme d'une dispersion aqueuse, d'un adhésif thermofusible, d'un adhésif thermofusible durcissable par UV ou d'un adhésif en solvant.

9. Produit adhésif sensible à la pression selon l'une quelconque des revendications précédentes, **caractérisé en ce que** le matériau du matériau de recouvrement est choisi parmi le papier siliconé et un film en plastique siliconé.

10. Produit adhésif sensible à la pression selon l'une quelconque des revendications précédentes, **caractérisé en ce qu'**il est configuré sous la forme d'une ou de plusieurs bandes adhésives ou feuilles adhésives, et comprend un ou plusieurs stratifiés adhésifs sensibles à la pression.

11. Produit adhésif sensible à la pression selon la revendication précédente, **caractérisé en ce qu'**il est configuré sous la forme d'une bande adhésif sans support, qui ne comprend pas de matériau support en plus de la couche de recouvrement et du revêtement.

12. Produit adhésif sensible à la pression selon l'une quelconque des deux revendications précédentes, **caractérisé en ce qu'**il se présente sous la forme d'une bande adhésive, la couche de recouvrement étant revêtue d'un côté avec un adhésif sensible à la pression bicomposant, la première zone et la deuxième zone du revêtement étant agencées l'une à côté de l'autre dans la direction longitudinale, chacune sur une moitié de la bande adhésive, et **en ce que** le matériau de recouvrement comprend une position de rupture agencée au milieu dans la direction longitudinale entre la première et la deuxième zone.

13. Produit adhésif sensible à la pression selon l'une quelconque des revendications précédentes, **caractérisé en ce que** le rapport molaire entre les premiers groupes fonctionnels et les deuxièmes groupes fonctionnels est de 1:4 à 4:1.

14. Procédé de collage d'un premier substrat avec un deuxième substrat, selon lequel
(1) un produit adhésif sensible à la pression selon l'une quelconque des revendications précédentes est mis à disposition, la première et la deuxième zone des revêtements étant agencées l'une à côté de l'autre sur un stratifié adhésif individuel, et le stratifié adhésif comprenant une position de rupture entre la première et la deuxième zone du revêtement avec l'adhésif sensible à la pression bicomposant,
(2) le stratifié adhésif est rabattu le long de la position de rupture, de sorte que la première et la deuxième zone du revêtement avec l'adhésif sensible à la pression bicomposant rentrent en contact l'une avec l'autre et qu'un durcissement de l'adhésif bicomposant soit initié,
(3) une partie du matériau de recouvrement est séparée avec séparation au niveau de la position de rupture, de sorte qu'une zone du revêtement avec l'adhésif sensible à la pression bicomposant soit au moins partiellement exposée,
(4) la zone exposée par séparation du matériau de recouvrement est reliée avec le premier substrat,
(5) la partie restante du matériau de recouvrement est séparée, et
(6) la zone exposée par séparation de la partie restante du matériau de recouvrement est reliée avec le deuxième substrat.

15. Produit adhésif sensible à la pression selon la revendication 4 ou 12, **caractérisé en ce que** la position de rupture est une perforation.
